## Europäisches Patentamt
## European Patent Office
## Office européen des brevets

(11) Veröffentlichungsnummer : **0 364 467 B1**

(12) **EUROPÄISCHE PATENTSCHRIFT**

(45) Veröffentlichungstag der Patentschrift :
09.09.92 Patentblatt 92/37

(51) Int. Cl.⁵ : **G06F 15/46**

(21) Anmeldenummer : **88904499.6**

(22) Anmeldetag : **06.06.88**

(86) Internationale Anmeldenummer :
**PCT/DE88/00333**

(87) Internationale Veröffentlichungsnummer :
**WO 88/10471 29.12.88 Gazette 88/28**

(54) **DATENVERARBEITUNGSANLAGE MIT EINEM BITPROZESSOR UND EINEM WORTPROZESSOR.**

(30) Priorität : **15.06.87 DE 3720006**

(43) Veröffentlichungstag der Anmeldung :
**25.04.90 Patentblatt 90/17**

(45) Bekanntmachung des Hinweises auf die
Patenterteilung :
**09.09.92 Patentblatt 92/37**

(84) Benannte Vertragsstaaten :
**AT CH DE FR IT LI SE**

(56) Entgegenhaltungen :
**DE-A- 2 715 497**
**GB-A- 2 028 543**
**US-A- 4 165 534**

(73) Patentinhaber : **Siemens Aktiengesellschaft**
**Postfach 22 16 34**
**W-8000 München 2 (DE)**

(72) Erfinder : **HINSKEN, Gerhard**
**In den Feldreben 3**
**W-7600 Offenburg (DE)**

## Beschreibung

Die Erfindung bezieht sich auf eine speicherprogrammierbare Steuerung mit einem Bitprozessor für die Verarbeitung von binären Kennsignalen, die durch I-Bit breite Wörter gegeben sind, und einem Wortprozessor, der zur Verarbeitung von digitalisierten Analogsignalen vorgegebener Wortbreite geeignet ist, wobei in Abhängigkeit vom Ergebnis einer Wortverarbeitung des Wortprozessors ein dementsprechendes Flag-Signal in einem Flag-Register gesetzt wird und wobei der Bitprozessor und der Wortprozessor durch mindestens ein Bussystem mit mindestens einem, die Befehle für den Betrieb der speicherprogrammierbaren Steuerung bein haltenden Befehlsspeicher sowie Ein-Ausgabe-Baugruppen für die Kennsignale und die Analogsignale verbunden sind.

Eine solche speicherprogrammierbare Steuerung ist beispielsweise in dem Artikel "Struktur und Arbeitsweise des Steuerungsgerätes SIMATIC S 32", Siemens-Zeitschrift Nr. 5O, I976, Heft 6, S.385 - 388, beschrieben. Bei diesen Steuerungen verarbeitet ein Wortprozessor entsprechend vorgegebener Befehle, die dem Wortprozessor von einem Befehlsspeicher (Zentralspeicher) zugeführt werden, digitalisierte Analogsignale, die dieser Prozessor entsprechend den Befehlen von Ein-Ausgabe-Baugruppen einliest. Die Ergebnisse der auf das Einlesen erfolgenden Datenverarbeitung werden dann jeweils an die entsprechende Ein-Ausgabe-Baugruppe gegeben, wodurch beispielsweise bestimmte Änderungen der zu steuernden Anlage bewirkt werden.

Ein zweiter Prozessor, vorzugsweise ein Bitprozessor, verarbeitet ebenfalls entsprechend vorgegebener Befehle aus demselben oder aus einem weiteren Befehlsspeicher binäre Kennsignale, die dieser Prozessor ebenfalls von Ein- und Ausgabe-Baugruppen einliest und an die dann das Ergebnis der Binärverarbeitung dieses Prozessors gegeben wird.

Bei solchen speicherprogrammierbaren Steuerungen wäre es wünschenswert, daß der Bitprozessor Ergebnisse der Analogwertverarbeitung des Wortprozessors ohne weiteres übernehmen kann.

Bisher war dies nur durch zeitaufwendige Routinen möglich. So mußten beispielsweise Ergebnisse der Analogsignalverarbeitung, die mit vorgegebener Wortbreite in bestimmten Registern vorlagen, durch Sprungbefehle, welche die üblichen Flags wie Carry, Over, Zero oder Signum erkennen, unterschieden werden, und es mußten der Sprungrichtung entsprechend unterschiedliche binäre Merker-Bits im Speicher gesetzt werden. Dabei wurde allerdings das Ergebnis der bisherigen Datenverarbeitung des Bitprozessors gelöscht, wenn dieses nicht durch spezielle Befehlsroutinen vorher in einem weiteren Merker-Bit abgelegt wurde. Vom Merker-Bit konnte dessen Inhalt dann nur durch eine weitere Routine wieder in den Bitprozessor eingelesen und dort bedarfsweise mit dem vom Wortprozessor kommenden Binärsignal verknüpft werden. Gerade solche zeitaufwendigen Maßnahmen sind für eine speicherprogrammierbare Steuerung, bei der es auf hohe Verarbeitungsgeschwindigkeit ankommt, nicht akzeptabel.

Eine Verbesserung könnte dadurch erreicht werden, daß Vergleichsbefehle der Wortverarbeitung automatisch auch das Ergebnis des Bitprozessors beeinflussen, jedoch ohne seine Vorgeschichte zu beachten. Solch eine Übergabe eines binären Signals kann aber zu Beginn einer binären Verknüpfung vorgenommen werden.

Aufgabe der Erfindung ist es, bei einer speicherprogrammierbaren Steuerung der eingangs genannten Art mit geringem technischen Aufwand und hoher Geschwindigkeit für eine Binärsignalverarbeitung relevante Ergebnisse einer Analogsignalverarbeitung so aufzubereiten, daß diese für den Bitprozessor frei verfügbar sind.

Diese Aufgabe wird durch die im kennzeichnenden Teil des Anspruchs I angegebenen Maßnahmen gelöst.

Eine erste Ausbildung der Erfindung ist dadurch gekennzeichnet, daß als Decodierer ein programmierbarer Festwertspeicher vorgesehen ist. Ein solcher programmierbarer Festwertspeicher kann beispielsweise ein handelsübliches ROM oder EPROM sein, das eine besonders einfache und preiswerte Realisierung eines Decodierers darstellen würde.

Der Decodierer könnte aber auch integraler Bestandteil des Wortprozessors selbst sein. Bei Wortprozessoren die speziell für speicherprogrammierbare Steuerungen geschaffen werden, wäre es nämlich ohne besonderen Aufwand möglich, die Decodiervorrichtung innerhalb eines solchen beispielsweise kundenspezifischen Wortprozessors unterzubringen.

Eine weitere Ausbildung der Erfindung ist dadurch gekennzeichnet, daß das jeweilige Zustandsbit in vorgegebene Speicherplätze eines zwischengeschalteten Schreib-Lese-Speichers hinterlegt ist, die vom Bitprozessor adressengesteuert abgefragt werden. Der besondere Vorteil dieser Ausbildung mit einem solchen sogenannten Pufferspeicher liegt darin, daß der Wortprozessor bei seiner Befehlsabarbeitung keine Rücksicht darauf nehmen muß, ob das durch ihn über den Decodierer ausgelöste Zustandsbit bereits vom Bitprozessor verarbeitet worden ist oder nicht. Der Wortprozessor erzeugt also mit anderen Worten in diesem Fall zusammen mit dem Decodierer das jeweilige, einer Analogwertverarbeitung entsprechende Zustandsbit und schreibt es in einen vorgegebenen Speicherplatz des Pufferspeichers, so daß er sich danach sofort seiner nächsten Aufgabe zuwenden kann, ohne auf den Bitprozessor Rücksicht zu nehmen. In diesem Fall muß dann der Bitprozessor den entsprechenden Speicherplatz des Pufferspeichers adressieren, um das entsprechende Zustandsbit einer bestimmten Analogwertverarbeitung auslesen zu können. Dieser Pufferspeicher könnte ein FIFO-Speicher ("First-In-First-Out") sein, so daß das jeweils erste eingeschriebene Zustandsbit auch das jeweils erste vom Bitprozessor ausgelesene Bit ist. In diesem Fall könnten entsprechende Adreßleitungen und Speicherorganisationsbefehle entfallen.

Die speicherprogrammierbare Steuerung kann aber auch so aufgebaut sein, daß sowohl der Bitprozessor als auch der Wortprozessor zusammen mit jeweils einem Befehlsspeicher, jeweils zugehörigen Ein-Ausgabe-Baugruppen und jeweils einem eigenen Bussystem jeweils eine autarke Datenverarbeitungsanlage bilden, wobei über eine gemeinsame Verbindung vom Bitprozessor das jeweilige Zustandsbit des dem Wortprozessor zugeordneten Decodierers abgefragt wird. Bei einer solchen Ausbildung der Erfindung wäre es möglich, daß bereits vorhandene Datenverarbeitungsanlagen, von denen die eine für eine Wortverarbeitung, die andere für die Binärsignalverarbeitung geeignet ist, mit geringem Aufwand miteinander gekoppelt werden können. Es kann jedoch auch der Fall sein, daß durch die getrennte Ausführung der Aufwand für die Bussysteme verringert werden kann, da der Bitprozessor u. U. eine geringere Busbreite benötigt als der Wortprozessor. Auch Wartezeiten des jeweiligen Prozessors, die dadurch bedingt sind, daß der jeweils andere Prozessor gerade das Bussystem belegt, werden durch diese Ausbildung der Erfindung vermieden, so daß mit einer Zunahme der durchschnittlichen Verarbeitungsgeschwindigkeit gerechnet werden kann.

Eine weitere vorteilhafte Ausbildung der Erfindung ist dadurch gekennzeichnet, daß bei einer, durch ein Flag-Signal erkennbaren, fehlerhaften Wortverarbeitung des Wortprozessors, zu jedem Eingangssignal des Decodierers an dessen Ausgang, zusätzlich zum Zustandsbit ein Fehlerbit decodiert wird und daß durch dieses Fehlerbit eine Interrupt-Prozedur ausgelöst wird. Die Auslösung einer Interrupt-Prozedur im Fall eines decodierten Fehlerbits verhindert, daß der Bitprozessor ein decodiertes Zustandsbit vom Decodierer übernimmt, das aus einer fehlerhaften Wortverarbeitung resultiert.

Ein Ausführungsbeispiel der Erfindung ist in der Zeichnung dargestellt und wird im folgenden näher erläutert. Dabei zeigen:

FIG I ein Blockschaltbild einer speicherprogrammierten Steuerung mit einem gemeinsamen Bussystem für einen Wort- und Bitprozessor und

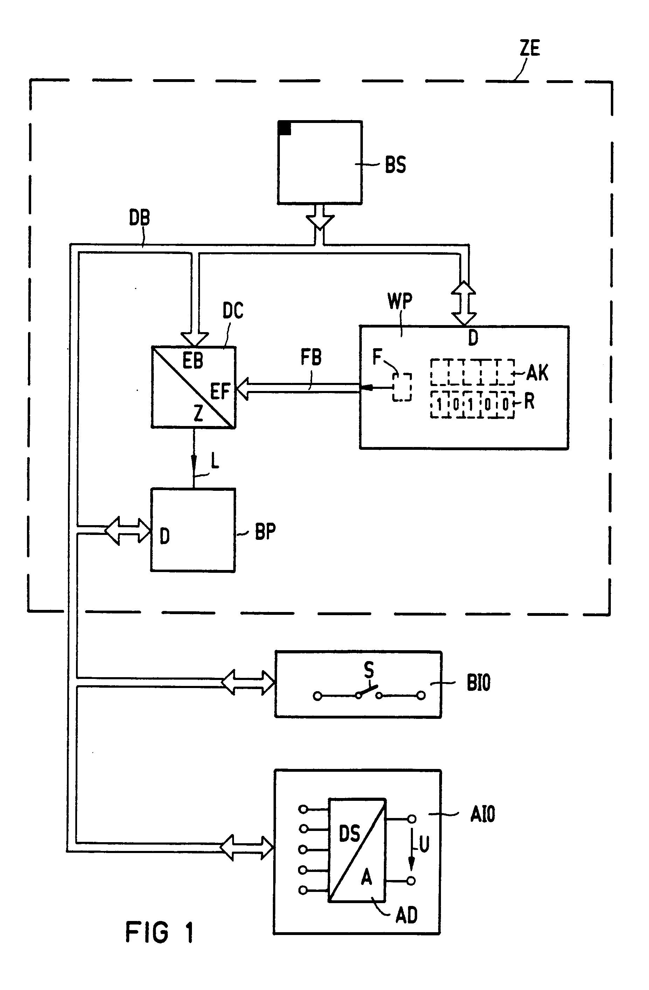

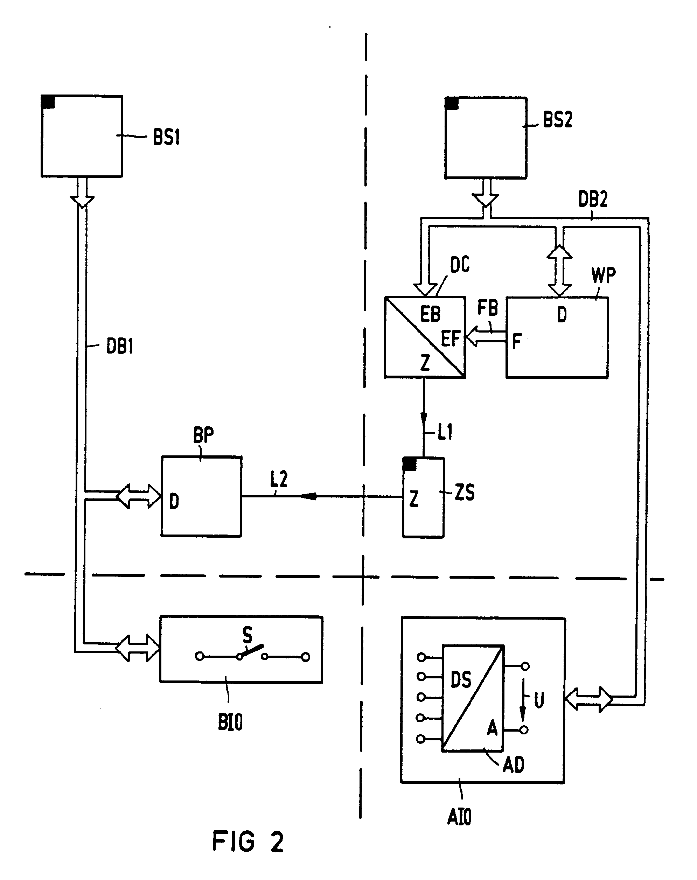

FIG 2 ein Blockschaltbild einer speicherprogrammierten Steuerung mit zwei getrennten Bussystemen.

Die Darstellung gemäß FIG I zeigt in Form eines Blockschaltbildes die einzelnen Elemente einer speicherprogrammierbaren Steuerung. Bei dieser ist ein gemeinsamer Datenbus DB für einen Bitprozessor BP und einen Wortprozessor WP, auf deren Funktion im folgenden noch eingegangen wird, vorgesehen. Die Elemente einer Zentraleinheit ZE der speicherprogrammierbaren Steuerung sind dabei in der Zeichnung durch eine gestrichelte Kontur zusammengefaßt. Diese Zentraleinheit ZE besteht im wesentlichen aus einem Befehlsspeicher BS, dem Wortprozessor WP einem Decodierer DC und dem Bitprozessor BP. Außerhalb der Zentraleinheit ZE befindet sich der Übersichtlichkeit halber im Ausführungsbeispiel eine sehr einfache Peripherie. Diese besteht aus einer Binärsignal-Ein-Ausgabe-Baugruppe BIO und aus einer Analogwert-Ein-Ausgabe-Baugruppe AIO.

Die Datenflußrichtung auf dem Datenbus DB ist, wie bei Bussystemen üblich, durch Pfeile gekennzeichnet. Die Datenanschlüsse D des Wortprozessors WP, sowie die Datenanschlüsse D des Bitprozessors BP sind direkt mit dem Datenbus DB verbunden. Die Eingänge EB des Decodierers DC sind ebenfalls mit dem Datenbus DB verbunden. Die Eingänge EF des Decodierers DC sind über einen Flag-Bus FB mit den Anschlüssen eines Flag-Registers F des Wortprozessors WP verbunden. Die Eingänge EB und EF sind jeweils Teilmengen der Eingänge des Decodieres DC. Der Ausgang Z des Decodierers DC ist über eine Leitung L mit dem Bitprozessor BP verbunden. Schließlich sind am Datenbus DB noch die Ein-Ausgabe-Baugruppen BIO und AIO für die Binär- und Analogsignale angeschlossen. Dabei ist als ein ein Binärsignal erzeugendes Element, bzw. in diesem Fall Bauteil, ein Schalter S vorgesehen. Als ein ein digitalisiertes Analogsignal erzeugendes Element, in diesem Fall Bauteil, ist ein Analog-Digital-Wandler AD vorgesehen, dessen Analogsignal-Eingang A an eine Spannungsquelle (Spannung U durch Pfeil angedeutet) angeschlossen ist und dessen Digitalsignal-Ausgang DS mit dem Datenbus DB verbunden ist.

Die Breite des Datenbusses DB ist im wesentlichen durch die Wortbreite des Wortprozessors WP vorgegeben. Übliche Wortbreiten sind beispielsweise 8 Bit, I6 Bit oder 32 Bit.

Der Übersichtlichkeit halber wurde auf die Darstellung von Decodierelementen, welche die Wortbreite des Datenbusses DB für den Decodierer DC bzw. für den Bitprozessor BP verringern könnten, verzichtet. Gleiches gilt für ein gemeinsames Adreßbussystem und ein Programmzähler, durch die der Befehlsspeicher BS vom Wortprozessor WP und/oder vom Bitprozessor BP adressiert werden kann, wodurch die entsprechende Ein-Ausgabe-Baugruppe von den Prozessoren WP, BP angesprochen werden kann.

Der Befehlsspeicher BS kann ein herkömmlicher Speicherbaustein, insbesondere ein ROM oder EPROM sein, dessen Wortbreite den Erfordernissen des Wortprozessors WP bzw. des Bitprozessors BP angepaßt ist. Der Wortprozessor WP kann ein kundenspezifisches Rechenwerk sein, es könnte aber auch ein modifizierter Standard-Mikroprozessor verwendet werden, der so abgeändert sein müßte, daß zusätzlich zu den Standardanschlüssen Anschlüsse für das stets vorgesehene Flag-Register nach außen geführt sind. Auch für den Decodierer DC kann im einfachsten Fall, ebenso wie für den Befehlsspeicher BS, ein herkömmlicher Speicherbaustein in Form eines ROM oder EPROM verwendet werden. Dabei werden die Adreßanschlüsse des Decodierers DC so aufgeteilt, daß einerseits die Leitungen des Datenbusses DB an den mit EB bezeichneten Adreßanschlüssen angeschlossen werden, andererseits die Leitungen des Flag-Busses FB, die von den Ausgängen des Flag-Registers F des Wortprozessors WP kommen, an den mit EF bezeichneten Adreßanschlüssen angeschlossen werden.

Der Bitprozessor BP kann ein herkömmliches Binärschaltwerk sein, wie es bei speicherprogrammierbaren Steuerungen verwendet wird und wie es beispielsweise in "Struktur und Arbeitsweise des Steuerungsgeräts Simatic S32", a. a. O., beschrieben ist. Der Schalter S der Binär-Ein-Ausgabe-Baugruppe BIO kann mechanischer, elektromechanischer, oder elektronischer Art sein. Für die Analogwert-Ein-Ausgabe-Baugruppe AIO kann beispielsweise ein gewöhnlicher Analog-Digital-Wandler AD verwendet werden.

Durch die Binär-Ein-Ausgabe-Baugruppe BIO kann die Schalterstellung des Schalters S abgefragt oder verändert werden. Die Analogwert-Ein-Ausgabe-Baugruppe AIO dient zur Eingabe und Ausgabe von digitalisierten Analogsignalen, die im folgenden mit "Analogwerte" bezeichnet werden. In der Zeichnung ist die Eingabe von Analogwerten dargestellt, die durch einen Analog-Digital-Wandler AD generiert werden. Mit diesem kann beispielsweise der Analogwert einer Spannung U, die am Analogeingang A des Analog-Digital-Wandlers AD anliegt, vom Wortprozessor WP am Digitalausgang DS des Analog-Digital-Wandlers AD abgefragt werden.

Bei einem Datenverabeitungsvorgang werden die im Befehlsspeicher BS abgelegten Befehle, die durch das Programm vorgegeben sind, ausgelesen und über den Datenbus DB dem Wortprozessor WP und dem Bitprozessor BP zugeführt. Bei der vorliegenden speicherprogrammierbaren Steuerung erkennen, wie beim Stand der Technik üblich, die Prozessoren WP, BP anhand der Struktur der Befehle, welcher für sie vorgesehen ist. Zur Befehlsausführung können beide Prozessoren WP, BP mit der für sie zuständigen Peripherie, Ein-Ausgabe-Baugruppen AIO, BIO über den Datenbus DB kommunizieren. Dabei ist der Bitprozessor BP für Binär-Ein-Ausgabe-Baugruppen BIO zuständig, für der Wortprozessor WP für die Analogwert-Ein-Ausgabe-Baugruppe AIO.

Der Bitprozessor BP ist in der Lage, binäre, logische Verknüpfungen, also beispielsweise "UND", "ODER", "NICHT UND", "NICHT ODER" - wie sie von der Boolschen Algebra bekannt sind - durchzuführen. Die Ergebnisse einer solchen Verknüpfung sind dann an die Binär-Ein-Ausgabe-Baugruppen BIO auszugeben um dort entsprechende Schalterstellungen (ggf. auch Ventilstellungen etc.) zu bewirken. Gewöhnlich.wird bei industriellen Steuerungen einer Änderung einer Schalter- bzw. Ventilstellung die Abfrage aller relevanten binären Schaltelemente der technischen Einrichtung durch den Bitprozessor BP vorausgehen.

Der Wortprozessor WP kann ebenfalls mit der ihn zugewiesenen Analog-Ein-Ausgabe-Baugruppe AIO kommunizieren. Außer den logischen Verknüpfungen können Wortprozessoren, wie der Wortprozessor WP, in der Regel noch eine Reihe von arithmetischen Verknüpfungen, z.B. Addition und Multiplikation, durchführen. Dabei verfügen solche Wortprozessoren über eine Einrichtung, die es ermöglicht, bestimmte Ergebnisse einer Wortverarbeitung durch einen Bitwert zu kennzeichnen. Eine entsprechende Einrichtung wird beispielsweise als Flag-Register bezeichnet. Eine solche Kennzeichnung von Ergebnissen der Wortverarbeitung ist beispielsweise dann üblich, wenn das Ergebnis der Wortverarbeitung gleich oder kleiner gleich Null ist, wenn sich eine positive oder negative Zahl ergibt oder wenn die Anzahl der Kennsignale logisch "I" im sich ergebenden Binärwort gerade oder ungerade ist.

Für die weitere Beschreibung sei aus der Vielzahl der Befehle die der Wortprozessor WP verarbeiten kann, ein Befehl für die Subtraktion zweier Zahlen herausgegriffen. Innerhalb des Symbols für den Wortprozessor WP ist in der zeichnerischen Darstellung ein Register R, ein Akkumulator-Register AK und ein Flag-Register F gestrichelt angedeutet. Die Register R und AK haben beispielsweise eine Wortbreite von 5-Bit, das Register F sei beispielsweise I-Bit breit. In die Zellen der Register R, AK und F kann jeweils ein Signal logisch "O" oder logisch "I" eingeschrieben werden. Im Register R sei die Dualzahl "IOIOO", die der Zahl 2O im Zehnersystem entspricht, fest vorgegeben. Durch einen Befehl aus dem Befehlsspeicher BS wird in das Register AK jeweils ein Wert der Analog-Ein-Ausgabe-Baugruppe AIO, der einer bestimmten Spannung U entspricht eingelesen. Die Spannung U entspreche beispielsweise dem Flüssigkeitsinhalt eines Behälters, der über eine ventilgesteuerte Zuleitung gefüllt werden kann und der 2O Liter aufnehmen soll. Die im Register R des Wortprozessors WP abgelegte Zahl entspricht damit der Sollfüllmenge dieses Behälters. Gemäß einer vorgegebenen Befehlsfolge wird der Wortprozessor WP jeweils das, dem jeweiligen Füllstand des Behälters entsprechende digitalisierte Analogsignal in das Akkumulator-Register AK einlesen und jeweils von der fest vorgegebenen Zahl im Register R subtrahieren. Das Ergebnis dieser Subtraktion wird dann im Register AK abgelegt und falls dieses

4

Ergebnis ungleich Null ist, wird in das Flag-Register F ein Signal logisch "O" eingeschrieben. Dieser Vorgang wiederholt sich solange, bis das Ergebnis im Register AK gleich "Null" ist. In diesem Fall wird dann in das Flag-Register F ein Signal logisch "I" eingeschrieben. Dieses Signal logisch "O" oder logisch "I" im Flag-Register kann jedoch zunächst noch nicht eindeutig interpretiert werden, da es nur durch den jeweiligen Wert im Register AK bestimmt ist. Dieser Wert im Register AK kann nämlich auch das Ergebnis beliebiger arithmetischer oder logischer Operationen sein, die vom Wortprozessor durchgeführt worden sind. Beispielsweise könnte auch das Ergebnis einer Vergleichsoperation oder ein Wort, das mit einem anderen Wort eines anderen Registerinhaltes verglichen werden soll, im Akkumulator-Register AK gleich oder ungleich "Null" sein, oder aber das Ergebnis einer Addition ist gleich oder ungleich Null, oder in das Akkumulator-Register AK wird per Befehl ein Wert gleich oder ungleich "Null" eingeschrieben.

Im hier vorgestellten Ausführungsbeispiel benötigt aber der Bitprozessor BP genau dann die Information des Flag-Registers F, wenn diese aus der Subtraktion der Registerinhalte R und AK bei der Füllstandsabfrage entstanden ist. Genau dann nämlich hat der Inhalt des Behälters seinen vorgegebenen Wert erreicht und der Bitprozessor BP muß über seine Binär-Ein-Ausgabe-Baugruppe BIO den Schalter S schließen und damit bewirken, daß das Ventil, das den Flüssigkeitszufluß des Behälters steuert, geschlossen wird.

Diese erforderliche eindeutige Information wird dadurch ermittelt, daß der Inhalt des Flag-Registers F zusammen mit dem diesen Inhalt bewirkenden Befehl an die Adreßeingänge EF und EB des Decodierers DC gelegt wird.

Angenommen, der Befehlscode für die Subtraktion des Inhalts des Registers AK vom Inhalt des Registers R bestünde als Binärwort "III". Zusammen mit dem Inhalt des Flag-Registers F, der entweder "O" oder "I" ist (je nach Füllstand) würde sich an den Adreßanschlüssen EB und EF des Decodierers DC entweder das Binärwort "IIIO" oder das Binärwort "IIII" einstellen, wobei also die jeweils letzte Ziffer durch den Inhalt des Flag-Registers F gegeben ist. Entsprechend den vorausgegangenen Überlegungen würde das Binärwort "IIIO" bedeuten, daß ein Subtraktionsbefehl die Subtraktion des Inhalts des Registers AK vom Inhalt des Registers R bewirkt hat, und daß dieser Subtraktionsbefehl als Ergebnis eine Zahl ungleich "Null" hatte. Das Binärwort "IIII" an den Adreßanschlüssen EB, EF des Decodierers DC würde bedeuten, daß ein Subtraktionsbefehl für die Subtraktion des Inhalts des Akkumulators AK vom Inhalt des Registers R als Ergebnis gleich "Null" war. Somit ist der Zustand des Flag-Registers F eindeutig interpretierbar und kann durch den Decodierer in Form eines binären Kennsignals am Ausgang Z kenntlich gemacht werden. Im der Übersichtlichkeit halber einfach ausgestalteten Ausführungsbeispiel wird durch das jeweilige Binärwort "IIII" oder "IIIO" ein diesen Kombinationen zugeordneter Speicherplatz des Decodierers DC adressiert und dessen Inhalt an den Ausgang Z des Decodierers DC gelegt. An den Speicherplätzen, die durch die jeweilige Adressierung angesprochen werden, würde beispielsweise bei der Adresse "IIII" ein Signal logisch "I" vorliegen und bei der Adresse "IIIO" ein Signal logisch "O". Für den Bitprozessor BP bedeutet - entsprechend den vorausgegangenen Erläuterungen - das Signal logisch "O" am Ausgang Z des Decodierers DC: "Flüssigkeitsbehälter noch nicht voll". Das Signal logisch "I" am Ausgang Z des Decodierers DC bedeutet: "Flüssigkeitsbehälter voll".

Der Bitprozessor BP fragt befehlsgesteuert während der Aktivitäten des Wortprozessors WP fortlaufend das Kennsignal am Ausgang Z des Decodierers DC über die Leitung L ab. Solange dieses Kennsignal logisch "O" ist, wird dieser Abfragevorgang zyklisch wiederholt. Zeigt die Abfrage des Kennsignals über die Leitung L jedoch das Ergebnis logisch "I", so signalisiert dies dem Bitprozessor BP "Flüssigkeitsbehälter voll". In diesem Fall wird vom Bitprozessor BP die Binär-Ein-Ausgabe-Baugruppe BIO adressiert und an diese der Befehl übermittelt, den Schalter S zu schließen. Daraufhin kann das Ventil betätigt werden, das den Flüssigkeitszulauf zum Behälter unterbricht.

Im Falle nichtsynchroner Arbeitsweise zwischen Wortprozessor WP und Bitprozessor BP, könnte es vorkommen, daß der Wortprozessor WP eine Reihe von Verknüpfungen bereits getätigt hätte, deren Ergebnisse in der geschilderten Weise dem Bitprozessor BP zur Verfügung zu stellen wären. In diesem Fall wäre es ratsam, zwischen dem Decodierer DC und dem Bitprozessor BP einen Zwischenspeicher als Pufferspeicher vorzusehen. In die Speicherplätze dieses Zwischenspeichers könnte dann das jeweilige Kennsignal des Decodierers DC geschrieben werden und vom Bitprozessor zum entsprechenden Zeitpunkt wieder abgerufen weiden. Diese würde eine entsprechende Adreßverwaltung dieses Pufferspeichers erfordern.

Die Darstellung gemäß FIG 2 zeigt ein Ausführungsbeispiel der Erfindung, bei dem eine Datenverarbeitungsanlage die den Bitprozessor BP beinhaltet, vollkommen getrennt ist von einer weiteren Datenverarbeitungsanlage, die den Wortprozessor WP beinhaltet. Beide Datenverarbeitungsanlagen verfügen über einen eigenen Befehlsspeicher BSI bzw. BS2 und über eigene Datenbusleitungen DBI bzw. DB2. Die beiden Datenverarbeitungsanlagen sind in der Zeichnung durch eine vertikal angedeutete gestrichelte Linie voneinander getrennt dargestellt. Ihre Ein-Ausgabe-Baugruppen BIO, AIO sind durch eine horizontal angelegte gestrichelte Linie von der jeweiligen Zentraleinheit der zugehörigen Datenverarbeitungsanlage getrennt. Bis auf einen Zwischenspeicher ZS, der sich innerhalb der Zentraleinheit, die den Wortprozessor WP beinhaltet, befindet und

EP 0 364 467 B1

der mit dem Decodierer DC über eine Leitung LI und mit dem Bitprozessor BP über eine Leitung L2 verbunden ist, sind alle übrigen Elemente bereits im Zusammenhang mit dem Ausführungsbeispiel gemäß FIG I beschrieben worden. Auch die Funktionsweise der speicherprogrammierbaren Steuerung gemäß FIG 2 unterscheidet sich von derjenigen nach FIG I nur dadurch, daß beide Datenverarbeitungsanlagen völlig autark sind, d. h. ihre Befehle aus einem jeweils eigenen Befehlsspeicher BSI bzw. BS2 bekommen und daß ihre Kommunikation mit dem jeweiligen Befehlsspeicher BSI bzw. BS2 und mit den Binär-Ein-Ausgabe-Baugruppen BIO, AIO über einen jeweils eigenen Datenbus DBI bzw. DB2 erfolgt.

Bei der völlig unabhängigen Arbeitsweise dieser beiden Datenverarbeitungsanlagen, ist es empfehlenswert, das decodierte Kennsignal im Zwischenspeicher ZS abzulegen. Dadurch können etwaige Synchronisationsmaßnahmen zwischen beiden Datenverarbeitungsanlagen vermieden werden. Dieser Zwischenspeicher ZS kann ein handelsüblicher Schreib-Lese-Speicher (RAM) sein, wobei die Adreßverwaltung dieses Speichers ZS durch den Wortprozessor WP vorgenommen werden könnte. Der Zwischenspeicher ZS könnte aber auch ein sogenannter "First-In-First-Out"-Speicher sein.

In diesem Falle würde jedes zuerst im Speicher ZS abgelegte Zustandsbit auch zuerst vom Bitprozessor BP wieder ausgelesen. Im letzteren Fall wäre natürlich die Abfrage des decodierten Kennsignals durch den Bitprozessor BP von der Reihenfolge der Erzeugung decodierter Kennsignals abhängig.

Bisher wurde die Arbeitsweise der Datenverarbeitungsanlage unter der Annahme beschrieben, daß bei der Wortverarbeitung durch den Wortprozessor WP keine Fehler auftreten. Es kann aber vorkommen, daß das Rechenergebnis im Akkumulator-Register AK des Wortprozessors WP beispielsweise durch einen Überlauf (Overflow) unrichtig ist. Damit ist das Flag-Signal im Flag-Register F, das zusammen mit dem es auslösenden Befehl ursächlich für die Decodierung des entsprechenden Zustandsbits ist, ebenfalls unrichtig und das am Ausgang Z des Decodierers DC vorliegende Zustandsbit würde zu einer fehlerhaften Weiterverarbeitung durch den Bitprozessor BP führen.

Um solchen Fehlern, die durch fehlerhafte Wortverarbeitung entstehen, vorzubeugen, können diejenigen Binärstellen des Flag-Registers F des Wortprozessors WP, die ein solches fehlerhaftes Rechenergebnis kennzeichnen, zur Decodierung eines Fehlerbits durch den Decodierer DC mit herangezogen werden. Dieses Fehlerbit würde zusätzlich zum Zustandsbit am Ausgang Z des Decodierers DC vorliegen und kann beispielsweise zur Erzeugung eines Hardware-Interrupts mit gleichzeitiger Fehlermeldung verwendet werden. Dadurch ist eine versehentliche Auswertung eines fehlerhaften Zustandsbits durch den Bitprozessor BP grundsätzlich ausgeschlossen.


## Patentansprüche

I. Speicherprogrammierbare Steuerung mit einem Bitprozessor (BP) für die Verarbeitung von binären Kennsignalen, die durch I Bit breite Wörter gegeben sind, und einem Wortprozessor (WP), der zur Verarbeitung von digitalisierten Analogsignalen vorgegebener Wortbreite geeignet ist, wobei in Abhängigkeit vom Ergebnis einer Wortverarbeitung des Wortprozessors (WP) ein dementsprechendes Flag-Signal in einem Flag-Register (F) gesetzt wird und wobei der Bitprozessor (BP) und der Wortprozessor (WP) durch mindestens ein Bussystem (DB) mit mindestens einem die Befehle für den Betrieb der speicherprogrammierbaren Steuerung beinhaltenden Befehlsspeicher (BS) sowie Ein-Ausgabe-Baugruppen (AiO, BiO) für die Kennsignale und die Analogsignale verbunden sind, **dadurch gekennzeichnet**, daß ein eingangsseitig mit dem Befehlsspeicher (BS) und dem Flag-Register (F) und ausgangsseitig mit dem Bitprozessor (BP) verbundener Decodierer (DC) vorgesehen ist, der aus seinen Eingangssignalen, die aus üblichen Flag-Signalen zusammen mit den Flag-Signalen bewirkenden Befehlen gebildet werden, jeweils ein Zustandsbit in Form eines binären Kennsignals erzeugt, welches der Bitprozessor (BP) durch einen ihm zugewiesenen, im Befehlsspeicher (BS) hinterlegten Befehl am Ausgang (Z) des Decodierers (DC) abfragt.

2. Speicherprogrammierbare Steuerung nach Anspruch I, **dadurch gekennzeichnet**, daß als Decodierer (DC) ein programmierbarer Festwertspeicher vorgesehen ist.

3. Speicherprogrammierbare Steuerung nach Anspruch I, **dadurch gekennzeichnet**, daß der Decodierer (DC) integraler Bestandteil des Wortprozessors (WP) ist.

4. Speicherprogrammierbare Steuerung nach einem der vorstehenden Ansprüche, **dadurch gekennzeichnet**, daß das jeweilige Zustandsbit in vorgegebene Speicherplätze eines zwischengeschalteten Schreib-Lese-Speichers (ZS) hinterlegbar ist, die vom Bitprozessor (BP) adressengesteuert abgefragt werden.

5. Speicherprogrammierbare Steuerung nach einem der vorstehenden An-sprüche, **dadurch gekennzeichnet**, daß sowohl der Bitprozessor (BP) als auch der Wortprözessor (WP) zusammen mit jeweils einem Befehlspeicher (BSI,BS2), jeweils zugehörigen Ein-Ausgabe-Baugruppen (BiO, AiO) und jeweils einem eigenen Bussystem (DBI, DB2) jeweils eine autarke Datenverarbeitungsanlage bilden, wobei über eine gemeinsame Verbindung (L2) vom Bitprozessor (BP) das jeweilige Zustandsbit des dem Wortprozessor (WP) zugeordneten Decodierers (DC) abgefragt wird.

6. Speicherprogrammierbare Steuerung nach einem der vorstehenden Ansprüche, **dadurch gekennzeichnet**, daß bei einer, durch ein Flag-Signal erkennbaren, fehlerhaften Wortverarbeitung des Wortprozessors (WP), zu jedem Eingangssignal (EB und EF) des Decodierers (DC) an dessen Ausgang zusätzlich zum Zustandsbit ein Fehlerbit decodiert wird und daß durch dieses Fehlerbit eine Interrupt-Prozedur ausgelöst wird.

## Claims

1. Programmable controller with a bit processor (BP) for the processing of binary identification signals, which are given by 1-bit wide words, and a word processor (WP) which is suitable for the processing of digitized analogue signals of specified word width, whereby, in dependence upon the result of a word processing of the word processor (WP) a corresponding flag signal is put in a flag register (F) and whereby the bit processor (BP) and the word processor (WP) are connected by at least one bus system (DB) with at least one command store (BS) containing the commands for the operation of the programmable controller as well as input/output modules (AiO, BiO) for the identification signals and the analogue signals, characterized in that a decoder (DC) is provided, connected on the input side to the command store (BS) and the flag register (F) and on the output side to the bit processor (BP) and generating from its input signals, which are formed from usual flag signals together with the commands effecting flag signals, in each case a status bit in the form of a binary identification signal, which the bit processor (BP) scans at the output (Z) of the decoder (DC) by a command assigned to it and stored in the command store (BS).

2. Programmable controller according to claim 1, characterized in that a programmable store of constant values is provided as decoder (DC).

3. Programmable controller according to claim 1, characterized in that the decoder (DC) is an integral component of the word processor (WP).

4. Programmable controller according to one of the preceding claims, characterized in that the respective status bit can be stored in specified memory units of an interposed read/write memory (ZS), which are scanned by the bit processor (BP) in an address-controlled manner.

5. Programmable controller according to one of the preceding claims, characterized in that both the bit processor (BP) and the word processor (WP) together with in each case one command store (BS1,BS2), in each case associated input/output modules (B10, A10) and in each case an individual bus system (DB1, DB2) form in each case a self-sufficient data-processing installation, whereby, via a common connection (L2) from the bit processor (BP) the respective status bit of the decoder (DC) associated with the word processor (WP) is scanned.

6. Programmable controller according to one of the preceding claims, characterized in that with a defective word processing of the word processor (WP), recognizable by a flag signal, in addition to the status bit, an error bit is decoded for each input signal (EB and EF) of the decoder (DC) at its output and that by means of this error bit an interrupt procedure is initiated.

## Revendications

1. Unité de commande programmable par mémoire, comportant un processeur de bits (BP) pour le traitement de signaux caractéristiques binaires, qui sont déterminés par des mots d'une largeur de 1 bit, et un processeur de mots (WP), qui convient pour traiter des signaux analogiques numérisés possédant une largeur de mot prédéterminée, et dans laquelle, en fonction du résultat d'un traitement de mots du processeur de mots (WP), un signal de drapeau correspondant est positionné dans un registre de drapeaux (F), et le processeur de bits (BP) et le processeur de mots (WP) sont raccordés par au moins un système de bus (DB) à au moins une mémoire d'instructions (BS) contenant les instructions pour le fonctionnement de l'unité de commande à programme enregistré en mémoire, ainsi que des modules d'entrée/sortie (AiO, BiO) pour les signaux caractéristiques et les signaux analogiques, caractérisée par le fait qu'il est prévu un décodeur (DC), qui est raccordé côté entrée à la mémoire d'instructions (BS) et au registre de drapeaux (F) et, côté sortie, au processeur de bits (BP), et qui produit, à partir de ses signaux d'entrée, qui sont formés à partir de signaux usuels de drapeaux conjointement avec des instructions déclenchant des signaux de drapeaux, respectivement un bit d'état sous la forme d'un signal caractéristique binaire qui interroge le processeur de bits (BP) au moyen d'une instruction qui lui est envoyée et est mémorisée dans la mémoire d'instructions (BS) et présente à la sortie (Z) du décodeur (DC).

2. Unité de commande programmable par mémoire suivant la revendication 1, caractérisée par le fait qu'il est prévu, comme décodeur (DC), une mémoire morte programmable.

3. Unité de commande programmable par mémoire suivant la revendication 1, caractérisée par le fait que le décodeur (DC) fait partie intégrante du processeur de mots (WP).

4. Unité de commande programmable par mémoire suivant l'une des revendications précédentes, caractérisée par le fait que le bit d'état respectif peut être mémorisé en des emplacements prédéterminés d'une mémoire intercalée d'enregistrement-lecture (ZS), qui sont interrogés par le processeur de bits (BP), d'une manière commandée par des adresses.

5. Unité de commande programmable par mémoire suivant l'une des revendications précédentes, caractérisée par le fait qu'aussi bien le processeur de bits (BP) que le processeur de mots (WP) forment, conjointement avec respectivement une mémoire d'instructions (BS1, BS2), des modules respectifs associés d'entrée/sortie (B10, A10), et respectivement un système propre de bus (DB1, DB2), respectivement une installation autonome de traitement de données, le bit d'état respectif du décodeur (DC) associé au processeur de mots (WP) étant interrogé par l'intermédiaire d'une liaison commune (L2) par le processeur de bits (BP).

6. Unité de commande programmable par mémoire suivant l'une des revendications précédentes, caractérisée par le fait que dans le cas d'un traitement défectueux de mots, identifiable par un signal de drapeau, du processeur de mots (WP), en plus du bit d'état, un bit d'erreur est décodé pour chaque signal d'entrée (EB ET UF) du décodeur (DC), à la sortie de ce dernier, et qu'une procédure d'interruption est déclenchée par ce bit d'erreur.

FIG 1

FIG 2